# EUROPÄISCHE PATENTSCHRIFT

(11) **EP 1 910 162 B1**
(45) Veröffentlichungstag und Bekanntmachung des Hinweises auf die Patenterteilung: **12.08.2009**
(21) Anmeldenummer: 06776384.7
(22) Anmeldetag: 25.07.2006
(51) Int. Cl.: B63B 21/50, B63B 21/29

(54) **VERFAHREN ZUR VERANKERUNG VON SCHWIMMKÖRPERANORDNUNGEN**
METHOD FOR ANCHORING OF FLOATING DEVICES
PROCEDE D'ANCRAGE POUR DES DISPOSITIFS FLOTTANTS

(30) Priorität: 04.08.2005 DE 102005036679
(43) Veröffentlichungstag der Anmeldung: 16.04.2008
(73) Patentinhaber: Ventotec Offshore Constructions Planungs- und Vermarktungsgesellschaft mbH, 26789 Leer (DE)
(72) Erfinder: JÄHNIG, Jens, 01738 Dorfhain (DE)
(74) Vertreter: Rothkopf, Ferdinand
(86) Internationale Anmeldenummer: PCT/EP2006/007290
(87) Internationale Veröffentlichungsnummer: WO 2007/014670

(56) Entgegenhaltungen:
- DE-A1- 3 201 975
- DE-A1- 10 223 314
- GB-A- 2 025 876
- JP-A- 58 214 488
- US-A- 4 602 588
- US-A- 4 922 847
- US-A- 4 951 592

## Beschreibung

Die Erfindung betrifft ein Vefahren zur Verankerung von Schwimmkörperanordnungen, wie beispielsweise schwimmende Plattformen.

Schwimmkörperanordnungen, d.h. im weitesten Sinne im Wasser von Auftriebskörpern getragene oder selbstschwimmende Einrichtungen, dienen häufig zur Aufnahme weiterer auch großer Anlagen oder Einrichtungen wie insbesondere Windkraftanlagen. Jedoch können Schwimmkörperanordnungen auch Leuchttürme, Sende- und/oder Empfangsanlagen, Radaranlagen, Forschungsstationen, Brücken, Hafenanlagen, Pontons, Anlagestationen, Ankerpunkte für Tauchschiffe, Flughäfen und dergleichen tragen. Die Anlagen sind dabei ortsfest zu sichern, wozu sie am Meeresgrund verankert werden.

Die DE 100 34 847 A1 offenbart eine Schwimmkörperanordnung, die eine Windkraftanlage trägt. Zur Verankerung dienen zahlreiche, in den Meeresgrund eingetriebene Pfahlanker.

Das Eintreiben von Pfahlankern in den Meeresboden wird mit größerer Wassertiefe zunehmend schwierig. Es ist jedoch ein Anliegen, Windkraftanlagen auch in größerer Wassertiefe errichten zu können.

Die DE 102 23 314 A1 offenbart ebenfalls eine Schwimmkörperanordnung, die eine Windkraftanlage trägt. Die untergetauchte Schwimmkörperanordnung ist mit Ballastkörpern verbunden, die aufgrund ihres hohen Gewichts auf dem Meeresboden lagern. Die Ballastkörper werden an Land vorgefertigt, zum endgültigen Standpunkt geschleppt und dort installiert. Sie bestehen aus Beton.

Nach Abbau der Anlage verbleiben sie am Meeresboden.

Zur Verankerung von Windkraftanlagen auf See, sind Ballastkörper erforderlich, die zusammengenommen einige Tausend Tonnen wiegen. Die Erstellung von Betonkörpern derartiger Größe und die Verbringung auf See stellt technische und logistische Probleme dar und ist ein erheblicher Kostenfaktor. Außerdem können am Meeresboden verbleibende Betonkörper nach Abbau solcher Anlagen ein Hindernis für die Schifffahrt darstellen, insbesondere wenn die Meerestiefe eher gering ist.

Aus DE-A-32 01 975 ist eine klappbarer Schiffsankerkorb mit Doppelankerkette bekannt, der mit Steinen gefüllt als Ballastanker für Schiffe dient. Nach Beendigung des Gebrauchs wird mit der Doppelankerkette vom Schiff aus der Ankerkorb auf Grund entleert und zum Transport zusammengeklappt.

Aus JP-A-58 214 488 ist ein Verfahren zum Herstellen eines Ankers bekannt, bei dem mittels einer Pumpe Sand vom Meeresgrund in einen Beutel gefüllt wird, an dem nachfolgend ein Stahlseil angebunden wird.

Aus US-A-4 922 847 ist eine Ankervorrichtung mit Ballaststeinen bekannt, die in einem Netz aufgenommen werden.

Aus GB-A-2 025 876 ist eine Ankervorrichtung bekannt, die bei Gefahr einer Beschädigung von Unterwasser-Pipelines oder dergleichen verwendet werden soll. Die Ankervorrichtung umfasst eine für Wasser durchlässige oder undurchlässige Hülle, in die partikelförmiges Materialien, wie etwa Sand, eingefüllt wird.

Davon ausgehend ist es Aufgabe der Erfindung, ein verbessertes Verfahren zur Verankerung von Schwimmkörperanordnungen anzugeben.

Diese Aufgabe wird mit einen Verfahren gemäß Anspruch 1 gelöst :

Das Verankerungselement des erfindungsgemäßen Verfahrens weist eine Zugmittelanordnung auf, die einen Ballastkörper umfasst und dadurch an diesem gesichert ist. Der Ballastkörper ruht durch sein Eigengewicht auf dem Meeresboden. Weil die Zugmittelanordnung den Ballastkörper umfasst, kommt es auf dessen Steifigkeit und Festigkeit weniger an. Er muss nicht notwendigerweise aus strukturell stabilem Beton angefertigt werden. Vielmehr kann zu seiner Errichtung minderwertiges Material, wie beispielsweise am Meeresboden vorgefundene Sande und Kiese dienen. Zur Errichtung des Verankerungselements muss somit lediglich die vormontierte Zugmittelanordnung an den Meeresboden verbracht bzw. abgesenkt werden, wo sie mit dort vorgefundenem Material gefüllt wird. Dies senkt den Aufwand zur Errichtung entsprechender Verankerungselemente erheblich.

Vorzugsweise umfasst die Zugmittelanordnung den Ballastkörper allseitig und ist dabei weiter vorzugsweise nach Art eines Netzes ausgebildet. Z.B. kann das Netz aus einzelnen steifen oder flexiblen Ringen, z.B. Stahlseilringen, bestehen, die miteinander verbunden sind. Solche Netze sind kostengünstig zu beziehen oder zu erstellen und widerstehen korrosivem Angriff im Seewasser deutlich länger als zwanzig Jahre, wenn sie aus dem geeigneten Material, z.B. verzinkten stahl oder Edelstahl, gefertigt sind. Das Netz vermittelt die an dem Verankerungselement angreifenden Zugkräfte flächenhaft auf die Oberfläche des umschlossenen Ballastkörpers.

Die Zugmittelanordnung kann Spannseile enthalten, die z.B. an Kanten oder Ecken des Ballastkörpers entlang führen und so die von dem Netz übertragenen Kräfte weiter leiten. Beispielsweise kann das Verankerungselement als Pyramide mit drei-, vier- oder mehreckiger Grundfläche oder als Quader mit oben angesetztem Pyramidenstumpf oder als Kegel oder ähnliches ausgebildet sein. Bei Kantenlängen von jeweils etwas mehr als zehn Metern können Gewichtskräfte oberhalb 2.000 Tonnen erzeugt werden.

Zu der Zugmittelanordnung gehört vorzugsweise ein Tragskelett, dessen Funktion darein besteht, die Zugmittelanordnung vor Füllung mit Ballaststoff aufgerichtet zu halten. Z.B. kann zu der Skelettanordnung ein zentraler Tragständer gehören, an dem später auch ein Verankerungsseil angreift, das die Schwimmkörperanordnung mit dem Verankerungselement verbindet.

Der Ballastkörper wird, wie eingangs erwähnt, aus Lockermaterial aufgebaut, das in der Umgebung des Verankerungselement dem Meeresboden entnommen wird. Das Lockermaterial wird dabei von einer Wandanordnung umschlossen, die wasserdurchlässig aufgebaut ist. Beispielsweise kann die Wandanordnung aus einem textilen Material, wie einem Vlies, einem Gewebe, einem Filz oder ähnlichem bestehen. Es kleidet die vorzugsweise als Netz ausgebildete Zugmittelanordnung innen aus und bildet einen mehr oder weniger großen Sack oder Beutel. Dieser ist von oben her wenigstens so weit offen, dass er durch eine Leitung mit einem Gemisch aus Wasser und Lockermaterial befüllbar ist. Dieses kann mittels einer Spülpumpe vom benachbarten oder ferner gelegenen Meeresboden gewonnen oder auch mit einem Schüttguttransporter herangeführt werden. Das in den überdimensionalen Beutel eingespülte Gemisch aus Lockermaterial und Wasser entmischt sich in dem von dem Beutel umschlossenen Volumen, wobei sich das Lockermaterial absetzt und überschüssiges Wasser durch die zahlreichen Poren oder kleine Öffnungen der Wandanordnung nach außen abströmt. Dabei werden Schlickstoffe vorzugsweise mit nach außen geführt, so dass in dem Beutel (in der Wandanordnung) vorwiegend Kiese und Sande verbleiben.

Erfindungsgemäß werden die eingespülten Kiese und Sande wenigstens an ihrer Oberfläche verfestigt, wodurch sicher gestellt wird, dass das Lockermaterial auch dann innerhalb der Zugmittelanordnung gehalten bleibt, wenn mechanische Beschädigungen der textilen Außenhaut auftreten oder die z.B. aus textilem Material ausgebildete Wandanordnung nach einiger Zeit vergehen sollte. Textile Materialien können beispielsweise von Organismen zersetzt werden und somit allmählich verschwinden.

Zur Verfestigung des Lockermaterials, wenigstens an seiner Oberfläche, dient vorzugsweise ein geeigneter Zement oder auch ein Kunststoff, wie beispielsweise eine Polymeremulsion, eine Kunstharzemulsion oder dergleichen. Das geeignete Bindemittel wird dem Lockermaterialkörper vorzugsweise über Leitungen zugeführt, die an der Wandanordnung bzw. der Zugmitzelanordnung befestigt sind und deren Mündungen in geringem Abstand (von z.B. 0,5 m) von der Wandanordnung in dem Lockermaterialkörper münden. Diese in vorzugsweise regelmäßigen Abständen angeordneten Mündungen bilden ein Raster, das das Volumen des Lockermaterialkörpers ganz umschließt. Ist die Wandanordnung, d.h. der entsprechende Beutel, mit Lockermaterial gefüllt, wird über die Leitungen das Bindemittel in den Lockermaterialkörper gepresst. Dieser bildet somit eine aushärtende Außenhaut aus, die so dimensioniert ist, dass der Ballastkörper über wenigstens die vorgesehene Nutzdauer, z.B. zwanzig Jahre stabil bleibt. Wenn es gewünscht wird, kann auch der gesamte Hallastkörper verfestigt werden, indem auch sein Inneres mit Bindemittel versetzt wird.

Nach dem Verpressen mit Zement oder einem sonstigen geeigneten Bindemittel können die Leitungen gekappt werden. Dies kann durch Abschneiden oberhalb des verankerungselements durch Abreißen oder durch Öffnen entsprechender Kupplungen geschehen.

Es ist des Weiteren möglich, derartige Ballastkörper relativ einfach zu entsorgen. Wird die Zugmittelanordnung, z.B. das Netz, aufgetrennt, kann es durch Winden nach oben gezogen werden, wobei es den Ballastkörper freigibt. Dieser kann angebohrt und mit Quellkörpern bestückt werden, die seine Schale aufsprengen. Der nicht verfestigte Inhalt verteilt sich dann auf natürliche Weise wieder am Meeresboden. Es ist des Weiteren möglich, Sprengladungen zur Zerlegung des Ballastkörpers zu nutzen, die die Schale aufsprengen, um den Inhalt des Ballastkörpers wieder freizugeben. Bei einer bevorzugten Ausführungsform werden ein oder mehrere Sprengkörper im Innenraum der Zugmittelanordnung platziert bevor das Lockermaterial eingespült und an seiner Außenseite verfestigt wird. Wird dann bei Abriss der Anlage die Sprengladung gezündet, wird durch die von innen nach außen laufende Druckwelle die harte Schale des Ballastkörpers in Bruchstücke zerlegt. Beim Anheben des Verankerungselements können nun der lockere, nicht verfestigte innere Kern des Ballastkörpers sowie die durch die Sprengung entstandenen Bruchstücke der Schale des Ballastkörpers durch die Maschen des ihn umfassenden Netzes auf den Meeresboden, fallen, während die nun wesentlich erleichterte Zugmittelanordnung geborgen werden kann. Die an der Oberseite der Konstruktion vorgesehenen Öffnungen und Ventile (durch die die Befüllung vorgesehen ist) kann zum Zeitpunkt des Rückbaus zum Ausspülen oder Aussaugen der Sande und Kiese genutzt werden.

Das Element kann unabhängig der Meerestiefe, der Untergrundbeschaffenheit, der hydrodynamischen Verhältnisse am geforderten Standort platziert werden.

Das Verankerungselement kann weitgehend unabhängig von der vorgesehenen Wassertiefe errichtet und rückgebaut werden. Die Errichtung ist weitgehend unabhängig von dem anzutreffenden Baugrund möglich. Außerdem sind an Land keine umfangreichen Vormontageplätze erforderlich. Der Aufbau der Verankerungselemente erfolgt schnell und effizient z.B. vom Schiff aus.

Weitere Einzelheiten vorteilhafter Details und Weiterbildungen der Erfindung sind Gegenstand der Zeichnung, der Beschreibung oder von Ansprüchen.

In der Zeichnung ist ein Ausführungsbeispiel der Erfindung veranschaulicht. Es zeigen:
- Figur 1: eine durch das erfindungagemäße Verfahren am Meeresboden verankerte Schwimmkörperan- ordnung,
- Figur 2: ein Verankerungselement in schematisierter Prin- zipdarstellung,
- Figur 3: einen Ausschnitt aus einer zu dem Verankerungs- element gehörigen Zugmittelanordnung in schemati- sierter Darstellung,
- Figur 4: ein Verankerungselement in schematisierter, aus- schnittsweiser geschnittener Darstellung,
- Figur 5: eine weitere schematisierte Schnittdarstellung eines Verankerungselements und
- Figur 6: die Errichtung eines Verankerungselements in sche- matisierter Übersichtsdarstellung.

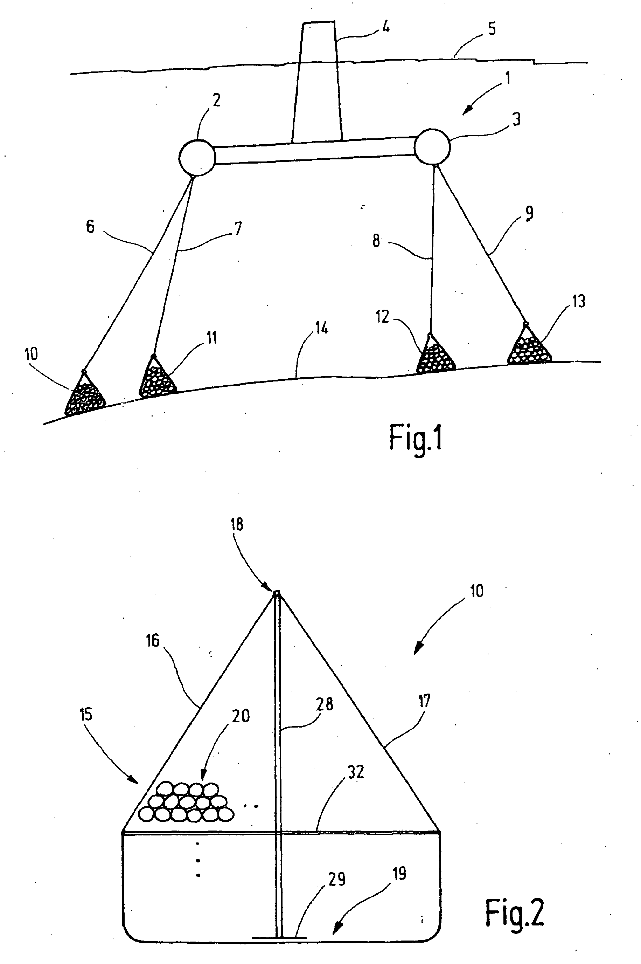

In Figur 1 ist eine Schwimmplattform 1 veranschaulicht, die eine Schwimmkörperanordnung mit mehreren Schwimmkörpern 2, 3 bildet und den Mast 4 einer Windkraftanlage trägt. Die Schwimmplattform 1 ist unter den Meeresspiegel 5 untergetaucht, wobei ihr Auftrieb (wesentlich) größer ist als die Summe aus ihrem Eigengewicht und dem Gewicht der auf ihr ruhenden Windkraftanlage. Um die Schwimmplattform 1 unter dem Meeresspiegel 5 zu halten, sind mehrere mit der Schwimmplattform über Verankerungsseile 6, 7, 8, 9 verbundene Verankerungselemente 10, 11, 12, 13 vorgesehen, die auf dem Meeresboden 14 ruhen.

Figur 2 veranschaulicht das Verankerungselement 10 stellvertretend für alle in schematisierter Form. Es weist eine äußere Zugmittelanordnung 15 auf, zu der vorzugsweise mehrere Spannseile 16, 17 gehören. Vorzugeweise laufen diese ausgehend von einer oberen Verankerungsstelle 18 außen um das Verankerungselement 10 herum. Vorzugsweise unterspannen sie insbesondere seine Unterseite 19. Zusätzlich verlaufen die vorgesehenen Spannseile von einzelnen Punkten der Grundfläche zum oberen Haltepunkt.

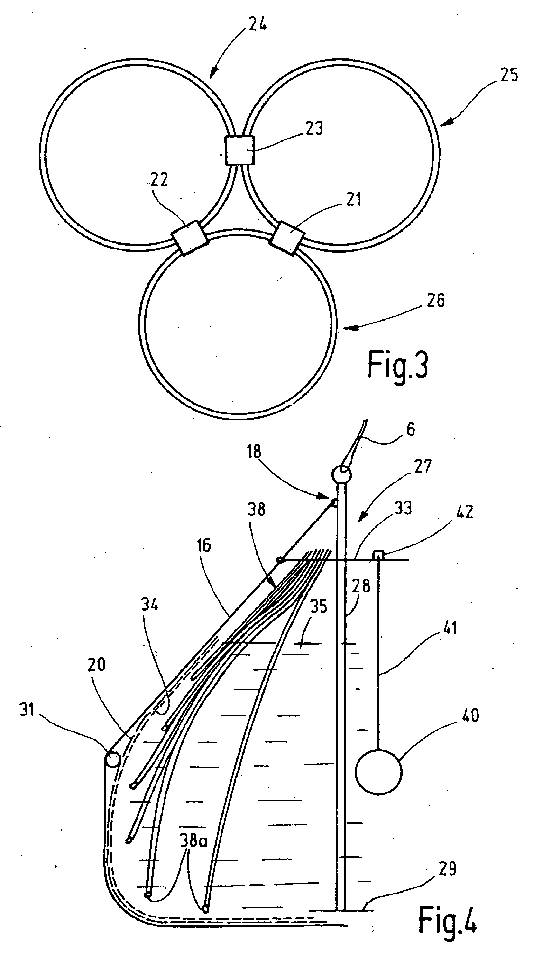

Zu der Zugmittelanordnung 15 gehört des Weiteren vorzugsweise ein Netz 20 oder ein ähnliches Gebilde, das die Seitenflächen und die Unterseite 19 des Verankerungselements 10 einnimmt. Das Netz 20 kann aus Draht, Rundstahl, Drahtseil oder ähnlichem zugfesten Material, wie beispielsweise Glasfasereeil oder auch seewasserfestem textilen Material bestehen. Dies gilt sowohl für die Spannseile 16, 17 als auch für das Netz 20. Bevorzugterweise besteht das Netz 20 aus einzelnen Drahtseilringen, die, wie in Figur 3 dargestellt ist, eine gewisse Flexibilität aufweisen und untereinander durch Manschetten 21, 22, 23 aus korrosionsfestem Blech oder Schäkeln verbunden sind. Alternativ können die einzelnen Ringe 24, 25, 26 auch durch Draht oder ähnliches miteinander verbunden sein. Es wird darauf hingewiesen, dass an Stelle des aus Ringen bestehenden Netzes 20 jedes andere Zugkräfte übertragende, grobmaschige Flächengebilde Anwendung finden kann.

Vorzugsweise gehört zu dem Verankerungselement 10 des Weiteren eine Skelettanordnung 27, die der an sich sehr flexiblen Zugmittelanordnung 15 eine gewisse Formstabilität verleiht und zwar insbesondere wenn noch kein Ballastkörper vorhanden ist. Die Skelettanordnung 27 weist einen vom Meeresboden weg aufragenden Teil, beispielsweise in Form eines zentralen Tragständers 28 auf, der durch ein korrosionsfestes Rohr, einen Gittermast oder dergleichen gebildet sein kann. Er erstreckt sich vorzugsweise über die gesamte Höhe des Verankerungselements 10 und weist an seinem unteren Ende eine Platte 29 oder alternativ auch eine Spitze auf, die sich in den Meeresboden eintreibt. In letzterem Fall ragt der Tragständer 28 deutlich über die Unterseite 19 der Zugmittelanordnung 15 vor. An dem Tragständer 28 ist die Verankerungsstelle 18 für die Spannseile 16, 17, beispielsweise in Form entsprechender Laschen oder Ösen ausgebildet. Außerdem kann an dem Tragständer 28 an dem oberen Ende eine Anschlusseinrichtung für das Verankerungeseil 6 vorgesehen sein. Hierzu dienen entsprechende Flansche, Ösen oder dergleichen.

Zu der Skelettanordnung 27 können weitere Mittel gehören, die die Zugmittelanordnung 15 in aufgeweiteter Form halten. Dazu können beispielsweise im Viereck miteinander verbundene Träger 31, 32 (Figuren 2 und 4) dienen, die von den Spannseilen 16, 17 getragen sind. Die Träger 31, 32 können zusätzlich mit dem Tragständer 28 verbunden sein. Bevorzugterweise sind sie jedoch frei.

In der Nähe seines oberen Endes kann an dem Tragständer 28 eine Montageplatte 33 oder eine geeignete anderweitige Tragstruktur angeordnet sein, die nochmals eine Verbindung zu den Spannseilen 16, 17 aufweist.

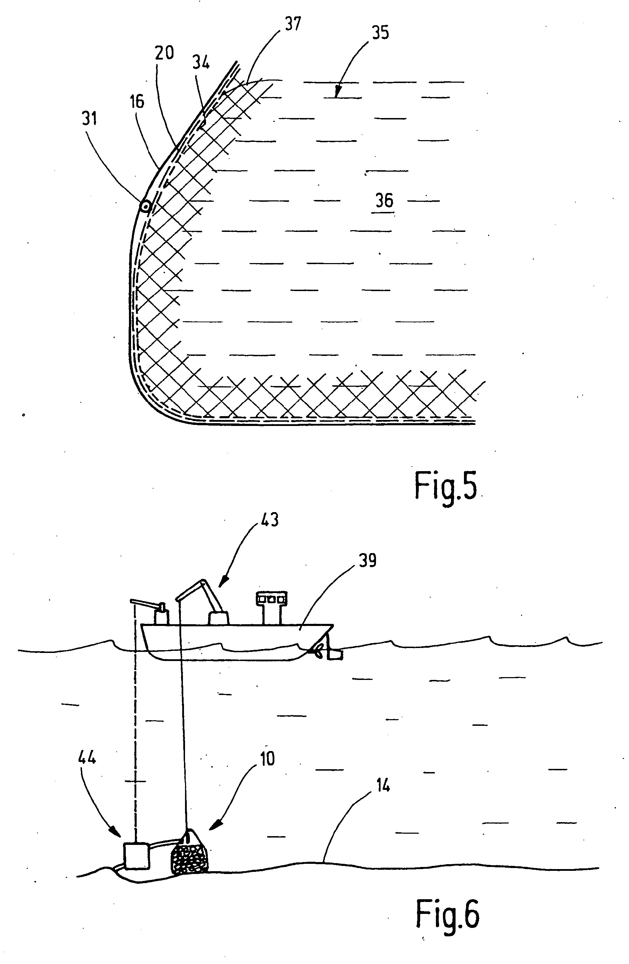

Wie insbesondere Figur 4 und auch Figur 5 erkennen lässt, liegt das Netz 20, das mit den Spannseilen 16 vorzugsweise verbunden ist, innen an diesen an. Es kann, wie dargestellt, innen oder auch außen an den Trägern 31, 32 vorbeiführen. Zu seinem Innenraum hin ist das Netz 20 mit einem vorzugsweise etwas flexiblen Beutel 34 ausgekleidet, der eine Wandanordnung bildet und die Seiten sowie den Boden des umschlossenen Innenraums lückenlos einnimmt. Der Beutel 34 besteht beispielsweise aus einem Naturfaservlies, -gewebe oder -gestrick, einem Filz, einem textilen Kunstfasermaterial oder dergleichen. Er besteht aus einzelnen kurzen oder längeren Fäden. Zwischen den Päden vorhandene Zwischenräume lassen Wasser durch die von dem Beutel 34 gebildete Wandanordnung hindurch treten. Es kann eine textile kombinierte Innenhülle bestehend aus einem Filz zum Schutz vor mechanischen Beschädigungen der tragenden. Innenhülle vorgesehen sein. Diese besteht vorzugsweise aus biaxial belastbaren hochfesten Gewebestoffen.

Der Beutel 34 umschließt, wie aus Figur 4 und 5 ersichtlich, einen Ballastkörper 35, der sich von innen an den Beutel 34 anschmiegt und diesen gegen das Netz 20 presst. Der Ballastkörper 35 besteht vorzugsweise aus einem Lockermaterial 36, beispielsweise aus vom Meeresboden 14 gewonnenen Sanden oder Kiesen. Vorzugsweise und insbesondere wenn der Beutel 34 aus verrottbarem Material besteht, aber auch in sonstigen Fällen weist der Ballastkörper 35 eine harte Schale 37 auf, die durch ein Gemisch aus Lockermaterial 36 und einem Bindemittel, beispielsweise Zement, gebildet ist. Zur Einleitung desselben ist die Zugmittelanordnung 15 schon vor Aufbau des Ballastkörpers 35 mit einer Anzahl Leitungen 38 versehen, die durch geeignete Mittel innerhalb des Beutels 34 fixiert sind. Ihre Mündungen, 38a halten dabei einen Abstand von z.B. 0,5 - 2,0 m voneinander, wobei die einzelnen Verpressventile Mündungen 38a durch geeignete Halter außerdem im Abstand zu dem Beutel 34 gehalten sind. Die Leitungen 38 führen an die Meeresoberfläche, auf der bei der Errichtung des Verankerungselements 10, wie Figur 6 zeigt, ein Schiff 39 fährt. Die Leitungen 38 sind beispielsweise an der Montageplatte 33 gehalten, wobei an dieser Stelle Sollbruchstellen, Sollrissstellen, trennbare Kupplungen oder dergleichen vorgesehen sein können.

Des Weiteren kann, wie Figur 4 veranschaulicht, an dem Tragständer 28 oder in der Nähe desselben ein oder mehrere seewasserfeste Sprengladungen 40 vorgesehen sein, deren Zündleitung 41 an der Montageplatte 33 gehalten sein kann. Es ist möglich, hier einen seewasserfesten Abschluss 42 anzubringen, der bedarfsweise zum Anschließen der Zündleitung 41 an eine Zündvorrichtung geöffnet werden kann.

Zur Errichtung des Verankerungselements 10 (sowie der weiteren Verankerungselemente) werden zunächst die Zugmittelanordnung 15 und falls vorhanden die Skelettanordnung 27 mit dem Schiff 39 an die geeignete Stelle verfrachtet oder auf Deck des Schiffs 39 aus entsprechenden vorbereiteten Stücken montiert. Mit einem Ladekran 43 kann die insgesamt relativ leichte Zugmittelanordnung 15 nebst Skelettanordnung 27 auf den Meeresboden 14 abgesenkt werden. Die Skelettanordnung 27 hält die Zugmittelanordnung 15 dabei gespreizt. Der Tragständer 28 ist auf dem Meeresboden 14 aufgestellt oder in diesen eingerammt. Der innerhalb derselben angeordnete Beutel 34 wird nun z.B. mittels einer Spülpumpe 44 mit Lockermaterial 36 gefüllt, das dem Meeresboden 14 entnommen wird. Ein Gemisch aus entsprechendem Lockermaterial, wie beispielsweise Sand oder auch Kies, wird dabei in den Beutel 34 eingespült, wo es sich sedimentiert. Das überschüssige Wasser tritt durch die Poren oder entsprechende Ventile des Beutels 34 wieder aus. Ebenso können evtl. vorhandene Feinstbestandteile möglicherweise aus dem Beutel 34 austreten.

Ist der Beutel 34 bis auf die gewünschte Höhe mit Lockermaterial 36 gefüllt, wird über die Leitungen 38 Bindemittels, wie beispielsweise Zement, in den Lockermaterialkörper injiziert und zwar vorwiegend und vorzugsweise in der Nähe seiner Außenseite sowie seines Bodens. Nach Aushärten des Bindemittels ergibt sich somit eine beispielsweise 0,5 m bis 1,0 m dicke, das Lockermaterial 36 umgebende Schale 37, deren Form an die Form des unter dem Gewicht des Lockermaterials gespannten Netzes 20 angepasst ist, so dass das Netz eine im Wesentlichen gleichmäßige Spannungsverteilung hat. Auch sind die Spannseile 16, 17 jeweils etwa gleich stark gespannt. Außerdem passt sich das Verankerungselement 10 an seiner Unterseite automatisch der Form des Meeresboden an und liegt somit sicher auf diesem.

Mit einem Gewicht von zwei bis drei Tausend Tonnen (oder auch mehr) bietet das Verankerungselement 10 ausreichend Halt auch für große Schwimmplattformen. Verankerungselemente können auf diese Weise schnell und in großer Zahl errichtet werden. Der Aufwand für den Materialtransport ist minimiert. Es müssen lediglich die relativ leichten Zugmittelanordnungen 15 und evtl. die Skelettanordnungen 27 mit dem Schiff an den Einbauort verfrachtet werden. Für die Erzeugung des Gewichts wird vor Ort vorhandenes Material genutzt. Sind die Ballastkörper 35 an ihrer Außenseite ausgehärtet, können die Leitungen 38 gekappt werden. Dies beispielsweise, indem sie schlicht abgerissen oder abgeschnitten werden.

So einfach wie die Montage ist auch die Demontage der Verankerungselemente 10 bis 13. Im bevorzugten Fall wird nach Abbau der Schwimmplattform 1 der Abschluss 42 (Figur 4) entfernt und es werden entsprechende Zündleitungen zu einem an der Meeresoberfläche befindlichen Schiff gelegt. Zündet dieses nun die Ladung 40 sprengt die erzeugte Druckwelle die Schale 37 auf. Die Bemessung ist dabei vorzugsweise so getroffen, dass die Schale 37 in kleinere Brocken zertrümmert wird. Wird nun der Tragständer 28 mit dem Ladekran eines Schiffs nach oben gezogen, beginnt das Lockermaterial 36 durch die Maschen des Netzes 20 und des zerrissenen Beutels 34 auf den Meeresboden auszutreten. Die Metallbestandteile werden somit vollständig zurückgewonnen. Das dem Meeresboden zur Errichtung des Verankerungselements 10 entnommene Material wird dem Meeresboden zurückgegeben.

Das Verankerungselement 10 weist eine äußere Tragstruktur in Form einer Zugmittelanordnung 15 auf, die vorzugsweise netzartig ausgebildet ist und einen Ballastkörper 35 umschließt, der durch örtlich vorgefundenes Material gebildet ist. Vorzugsweise ist er an seiner Oberfläche durch geeignete Bindemittel verfestigt, so dass er formstabil ist. In seinem Kern kann er unverfestigt sein, was die Demontage solcher Schwergewichtselemente erleichtert. Es muss lediglich durch geeignete Maßnahmen die Schale 37 des Ballastkörpers 35 geöffnet oder zerkleinert werden, um das umschlossene Lockermaterial austreten zu lassen und die Zugmittelanordnung bergen zu können.

## Patentansprüche

1. Verfahren zur Verankerung von Schwimmkörperanordnungen (1), bei dem:
a. eine Zugmittelanordnung (15) errichtet wird,
b. die Zugmittelanordnung (15) mit einer wasserdurchlässigen Wandanordnung (34) versehen wird,
c. die Zugmittelanordnung (15) mit der Wandanordnung (34) auf den Meeresboden (14) abgesenkt wird,
d. die Wandanordnung (34) mit vom Meeresboden (14) entnommenem Lockermaterial (36) gefüllt wird,
e. das Lockermaterial (36) wenigstens in seiner äußeren Schicht durch Einleitung eines Bindemittels verfestigt wird und bei dem
f. die Schwimmkörperanordnung (1) durch wenigstens ein Zugmittel (6) mit der Zugmittelanordnung (15) verbunden wird.

2. Verfahren nach Anspruch 1, **dadurch gekennzeichnet, dass** die Zugmittelanordnung (15) oberhalb des Meeresspiegels (5) errichtet wird.

3. Verfahren nach Anspruch 1, **dadurch gekennzeichnet, dass** die Zugmittelanordnung (15) auf Deck eines Schifffes (39) errichtet und dann mittels eines Ladekrans (43) auf den Meeresboden (14) abgesenkt wird.

4. Verfahren nach Anspruch 1, **dadurch gekennzeichnet, dass** das Lockermaterial (36) mittels einer Spülvorrichtung (44) in die von der Zugmittelanordnung (15) nach außen abgestützte Wandanordnung (34) eingespült wird.

## Claims

1. Method of anchoring floating body arrangements (1), wherein:
a) a tension means arrangement (15) is erected,
b) the tension means arrangement (15) is provided with a water-permeable wall arrangement (34),
c) the tension means arrangement (15) with the wall arrangement (34) is lowered onto the sea bed (14),
d) the wall arrangement (34) is filled with loose material (36) taken from the sea bed (14),
e) the loose material (36) at least in its outer layer is consolidated by introducing a binding agent and wherein
f) the floating body arrangement (1) is connected by at least one tension means (6) to the tension means arrangement (15).

2. Method according to claim 1, **characterized in that** the tension means arrangement (15) is erected above the sea level (5).

3. Method according to claim 1, **characterized in that** the tension means arrangement (15) is erected on the deck of a ship (39) and then lowered by means of a deck crane (43) onto the sea bed (14).

4. Method according to claim 1, **characterized in that** the loose material (36) is jetted by means of a jetting device (44) into the wall arrangement (34), which is outwardly supported by means of the tension means arrangement (15).

## Revendications

1. Procédé d'ancrage pour des agencements de dispositifs flottants (1) dans lequel :
a. un agencement de moyen de traction (15) est réalisé ;
b. l'agencement de moyen de traction (15) est pourvu d'un agencement de paroi (34) perméable à l'eau ;
c. l'agencement de moyen de traction (15) est abaissé au fond de la mer (14) avec l'agencement de paroi (34) ;
d. l'agencement de paroi (34) est rempli de matériau en vrac (36) extrait du fond de la mer (14) ;
e. le matériau en vrac (36) est fixé au moins au niveau de sa couche extérieure par introduction d'un moyen d'adhésion ; et
f. l'agencement de dispositif flottant (1) est relié à l'agencement de moyen de traction (15) par au moins un moyen de traction (6).

2. Procédé selon la revendication 1, **caractérisé en ce que** l'agencement de moyen de traction (15) est réalisé au-dessus du niveau de la mer (5).

3. Procédé selon la revendication 1, **caractérisé en ce que** l'agencement de moyen de traction (15) est réalisé sur le pont d'un navire (39) puis descendu au fond de la mer (14) à l'aide d'une grue de chargement (43).

4. Procédé selon la revendication 1, **caractérisé en ce que** le matériau en vrac (36) est rincé à l'aide d'un dispositif de rinçage (44) prévu dans l'agencement de paroi (34) soutenu vers l'extérieur par l'agencement de moyen de traction (15).
